# EUROPEAN PATENT SPECIFICATION

(11) **EP 2 699 086 B1**
(45) Date of publication and mention of the grant of the patent: **07.11.2018**
(21) Application number: 12722176.0
(22) Date of filing: 19.04.2012
(51) Int. Cl.: A01N 25/10

(54) **USE OF COATING COMPOSITIONS FOR PATHOGEN CONTROL IN MONOCOTYLEDONOUS PLANTS**
VERWENDUNG VON BESCHICHTUNGSZUSAMMENSETZUNGEN ZUR SCHÄDLINGSBEKÄMPFUNG BEI EINKEIMBLÄTTRIGEN PFLANZEN
UTILISATION DE COMPOSITIONS D'ENROBAGE POUR LUTTER CONTRE DES AGENTS PATHOGÈNES DANS DES PLANTES MONOCOTYLES

(30) Priority: 20.04.2011 GB 201106741
(43) Date of publication of application: 26.02.2014
(73) Proprietor: Exosect Limited, Colden Common Winchester Hampshire SO21 1TH (GB)
(72) Inventor: JESSOP, Nicholas, Hugh, Hylton, Winchester Hampshire SO21 1TH (GB)
(74) Representative: Schlich, George
(86) International application number: PCT/GB2012/000356
(87) International publication number: WO 2012/143674

(56) References cited:
- WO-A1-97/33472
- WO-A1-03/051112
- WO-A1-2011/148144
- WO-A2-01/78509
- WO-A2-2011/128639
- DE-A1- 19 906 491
- GB-A- 2 268 676
- GB-A- 2 425 954
- US-A- 4 297 339
- US-A- 5 283 060
- US-A1- 2007 072 775
- US-A1- 2009 143 447
- US-A1- 2010 291 231
- Anonymous: "Exosect: an innovative electrostatic technology providing environmentally friendly pest control | University of Southampton", , 26 November 2013 (2013-11-26), XP055266408, Retrieved from the Internet: URL:http://web.archive.org/web/20131126150 022/http://www.southampton.ac.uk/biosci/re search/impact/exosect_providing_environmen tally_friendly_pest_control.page? [retrieved on 2016-04-18]

## Description

The present invention relates to the use of a coating composition in dry powder form including an organic carrier material and a biological agent as a coating on a seed of a monocotyledonous plant and methods of coating such seeds.

Large losses in monocotyledonous crops are recorded annually and come about as a result of plant infestations due to pathogens such as bacteria, fungi and arthropods which can infest the plant at various stages of development, such as at the seed stage. Agronomic losses due to pathogen infestations remain high despite many defensive measures that have been devised by man to combat such infestations. Such defensive measures include the use of synthetic chemicals; the employment of genetic engineering in plants; and the use of live biological agents that are applied in the form of coatings, sprays and washes to monocotyledonous seeds.

Pesticides in the form of chemical agents such as fungicides, bactericides and arthropodicides, typically in the form of insecticides and/or acaricides may be applied to monocotyledonous crops in the form of soil drenches, liquid seed treatments and the like. Such kinds of chemical treatments tend to be indiscriminate and may adversely affect beneficial bacteria, fungi and arthropods as well as the plant pathogens at which such treatments are targeted.

When conventional pesticides are used, for example, as seed treatments the seeds are coated with pesticide directly or the pesticide is applied to the seed in the presence of an inorganic carrier. Such seed treatments are typically applied in liquid form or as wet slurry and subsequently the seeds are dried. Such treatments are mostly aimed at providing direct protection against pathogens such as arthropods and/or seed borne microorganisms and/or soil borne microorganisms that attack the seed. The high level of chemicals that are typically used introduces a chemical load to the environment that may give rise to ecological concerns.

One problem in applying a biological agent that is a chemical agent in conventional seed coating procedures is that the chemical agent is typically applied as slurry and this may give rise to an uneven application of the coating whereby the seeds are not fully coated or a percentage of the seeds, up to 20% depending on seed type and coating procedure do not get substantially coated. Furthermore, the seed coatings may not be uniform and this gives rise to physical weaknesses in the seed coat and the coating may flake off.

A further problem arises when using biological agents that are selected from beneficial live bacterial and fungal species that may be applied conventionally to plant structures, for example as spores in conjunction with an inorganic carrier in the form of particulate compositions or in the form of liquid compositions which may then be dried back, is that the applied biological agents rapidly lose viability. Without the intention of being bound by theory it is thought that as the seeds or storage organs are dried back, the micro-environment alters and the viability of applied live biological agents may be seen to decrease sharply and almost as soon as the applied composition is dried. The loss of viability of the biological agent is typically associated with the splitting of the fungal or bacterial spores which renders them non-viable.

It has now been found that by using an organic carrier material in conjunction with a biological agent, the viability of the biological agent is improved on monocotyledonous seeds, relative to the viability of biological agents applied to such seeds conventionally. Furthermore, the coating of the plant structure is less susceptible to flaking.

It is an object of the present invention to supply improved coatings comprising biological agents for monocotyledonous plant structures such as seeds. Furthermore, it is an object of the invention to supply seed coatings that utilise fewer chemical additives and/or lesser amounts thereof for protecting seed and/or young plantlets from pathogens than conventional seed coatings.

These and other objects of the invention will become apparent from the following description and examples.

According to the present invention there is provided use of a coating composition in dry powder form, wherein the coating composition comprises at least one organic carrier material in the form of particles having a volume mean diameter of 8 to 200 µm, the carrier material being selected from waxes having a melting point of ≥50° Centigrade, and at least one biological agent having an activity against at least one pathogen of a monocotyledonous plant as a coating on a seed of a monocotyledonous plant.

Farmers crops are typically destined for many diverse markets such as food derived from cereals e.g. bread, breakfast cereals, starch production, brewing and in the production of fodder for domesticated livestock, such as chickens and cattle. For the purposes of the present invention "seeds" and "seed" are to be construed as being in the plural or the singular depending on context. Reference to "seed" and "seeds" is used interchangeably and means seeds, typically viable seeds, to which compositions of the invention may be applied. Monocotyledonous seed as provided herein means seeds that are capable of germinating to at least conventional levels of germination typical of monocotyledonous plant seeds. Monocotyledonous seeds includes those that may be used for the planting of monocotyledonous plants such as varieties of *Oryza spp.* such as *Oryza sativa* (rice), *Triticum spp.* such as *T. aestivum* (wheat: Spring and Winter varieties), *Secale spp.* such as *Secale cereale* (rye), *Avena spp.* such as *Avena sativa* (oats), Zea *spp.* such as *Zea mays* [corn (maize)], *Sorghum spp.* such as *Sorghum bicolor* (sorghum), *Hordeum spp.* such as *Hordeum vulgare* (barley) and hybrid crosses of monotcotyledonous plants such as *x Triticosecale* (triticale: cross between wheat and rye).

Generally, the organic carrier material of use in the invention is present in the form of particles in a composition of the invention and which composition has a volume mean diameter of a certain size as defined herein. To obtain particles of organic materials of a volume mean diameter applicable for use in the invention, organic materials in the form of, for example, 1 to 5 kilogram blocks or tablets may be broken up or kibbled into small millimetre-sized pieces (such as from 2mm - 8mm approximate diameter in size, for example from 4mm to 6mm) in a kibbling machine. The millimetre-sized pieces can then be passed through a comminuting means such as a standard mill, e.g. an Apex Comminuting mill, and milled or comminuted into particles having an approximate diameter in the range from 100µm - 500µm, for example from 250µm - 300µm. The micron-sized comminuted particles can then be passed through a micronising apparatus, such as an AFG micronising air mill to obtain particles of a desired VMD range, such as from 15µm - 20µm, that is of use in the present invention. The skilled addressee will appreciate that such procedures for obtaining small particles are well known in the art. Particles of the invention that possess a volume mean diameter ≥10µm are considered to be less of a thoracic hazard to humans and are not thought to be allergenic.

The "one or more biological agents" that may be added to dry powders of the invention include chemicals of use against pathogens such as arthropods such as insects, arachnids or if appropriate, their larvae, eggs, or pupae; chemicals of use against bacterial pathogens; and chemicals of use against fungal pathogens. Additionally, beneficial live biological agents may be added to such dry powders of use in the present invention, the live biological agents being able to target bacterial pathogens of the monocotyledonous plant and/or to target fungal pathogens of the monocotyledonous plant. Spores of choice of beneficial live biological agents such as fungal conidia or hyphae or mycelia of fungi that do not form spores or conidia-like structures may be added to dry powders of use in the present invention. Suitable organic carrier materials of use in the invention are preferably made up of waxes having a melting point of ≥60°C, and most preferably are made up of hard waxes having a melting point of ≥70°C.

Natural waxes of use in the present invention include carnauba wax, beeswax, Chinese wax, shellac wax, spermaceti wax, myricyl palmitate, cetyl palmitate, candelilla wax, castor wax, ouricury wax, wool wax, sugar cane wax, retamo wax, rice bran wax and the like.

Synthetic waxes of use in the present invention include suitable waxes selected from paraffin wax, microcrystalline wax, Polyethylene waxes, Fischer-Tropsch waxes, substituted amide waxes, polymerized α-olefins and the like.

Mineral waxes of use in the invention include montan wax (e.g. Lumax® Bayer) ceresin wax, ozocerite, peat wax and the like.

The waxes may be selected from waxes such as carnauba wax, beeswax, montan wax, Chinese wax, shellac wax, spermaceti wax, myricyl palmitate, cetyl palmitate, candelilla wax, castor wax, ouricury wax, wool wax, sugar cane wax, retamo wax, and rice bran wax or a mixture of two or more thereof, having a melting point of ≥50°C. Such waxes typically display a high enthalpy of lattice energy during melt. Preferably the wax is carnauba wax. Generally, the particles of use in the invention possess a volume mean diameter as herein described.

Additionally, the organic carrier particles of use in compositions of the invention may contain other components such as additives selected from UV blockers such as beta-carotene or p-amino benzoic acid, colouring agents such as optical brighteners and commercially available colouring agents such as food colouring agents, plasticisers such as glycerine or soy oil, antimicrobials such as potassium sorbate, nitrates, nitrites, propylene oxide and the like, antioxidants such as vitamin E, butylated hydroxyl anisole (BHA), butylated hydroxytoluene (BHT), and other antioxidants that may be present, or mixtures thereof. The skilled addressee will appreciate that the selection of such commonly included additives will be made depending on end purpose, and perceived need.

A biological agent for the purposes of the present invention is one that can be used to control the population of a plant pathogen of a monocotyledonous plant, and may be selected from chemical fungicides, arthropodicides such as insecticides and acaricides, bactericides and from live biological agents that are able to control the population of one or more seed or soil borne pathogens of a monocotyledonous seed. Preferably, the population of the soil borne pathogen on or in the immediate proximity of the monocotyledonous seed is reduced either by the biological agent rendering it unable to reproduce or by killing it. Examples of biological agents of use in the present invention that are chemicals of use on monocotyledonous seeds include those chemical agents most commonly used on stored grain seeds that are effective against arthropods such as rice weevil, Sitophilus oryza; granary weevil, Sitophilus granaries; lesser grain borer, Rhyzopertha dominica; Angoumois grain moth, Sitotroga cerealella; cadelle, Tenebroides mauritanicus; saw-toothed grain beetle, Oryzaephilus surinamensis; flat grain beetle, Cryptolestes pusillus; flour beetles, Tribolium species; dermestids, Trogoderma species; bruchids, several bean and cowpea weevils; Indian-meal moth, Plodia interpunctella; and almond moth, Ephestia cautella. Examples of suitable chemicals of use in the invention may be selected from the pyrethroids, such as α-cypermethrin, A-cyhalothrin, [cyano-(3-phenoxyphenyl)-methyl] 3-(2,2-dibromoethenyl)-2,2-dimethyl-cyclopropane-1-carboxylate (deltamethrin), and τ-fluvalinate, the organophosphates such as chlorpyriphos (diethoxy-sulfanylidene-(3,5,6-trichloropyridin-2-yl)oxy-I^{5}-phosphane), malathion (diethyl 2 dimethoxyphosphino -thioyl-sulfanylbutanedioate), coumaphos (3-chloro-7-diethoxyphosphinothioyloxy-4-methylcoumarin), and stirifos ([(E)-2-chloro-1-(2,4,5-trichlorophenyl)ethenyl] dimethyl phosphate) the carbamates such as amitraz (N-(2,4-dimethylphenyl)-N-[(2,4-dimethylphenyl)iminomethyl]-N-methylmethanimidamide), the spinosans such as spinosad (Dow Agrichemical, France), the gamma amino butyric acid (GABA) inhibitors such as fipronil (5-amino-1-[2,6-dichloro-4-(trifluoromethyl)phenyl]-4(trifluoromethylsulfinyl) pyrazole-3-carbonitrile), the neonicotinoids such as imidacloprid (N-[1-[(6-Chloro-3-pyridyl)methyl]-4,5-dihydroimidazol-2-yl]nitramide), the anthranilamides, the formononetins such as 7-Hydroxy-3-(4-methoxyphenyl)chromone, the essential oils such as tea tree oil, thyme oil (also known as thymol), citronella oil, and menthol, and the insect growth regulators such as methoxyfenozide (*N-tert*-butyl-*N'*-(3-methoxy-*o*-toluoyl)-3,5-xylohydrazide) and the like.

Examples of live biological agents (also known as biocontrol organisms or biocontrol agents) that are commonly referred to in the art as "biological antagonists" that may be used in coating compositions of the present invention include *Pseudomonas spp.* such as *P*. *Chlororaphis* for use on barley and oats and other monocotyledonous plants (available from BioAgri AB, Uppsala, Sweden), *Burkholderia spp.* such as B. *cepaciatype* Wisconsin for use on barley, sorghum, and wheat (available as "Deny" from Stine Microbial Products, Memphis, USA; and for use on Maize *B. cepaciatype* available as "Intercept" from Soil Technologies Corp., Fairfield, USA),.

Soil borne pathogens for the purposes of the present invention are ones that are able to colonise the seed cuticle and/or ones that populate the soil and which are capable of acting on monocotyledon seeds. Such soil borne pathogens are typically bacteria and/or fungi. Examples of soil borne bacterial and fungal pathogens that attack monocotyledonous plants include *Rhizoctonia spp.* (e.g. *R. microsclerotia* active against maize; and rice; sorghum; wheat; barley; oats; and rye;), *Aspergillus spp.* such as *A. flavus* and *A. niger* (e.g. active against maize), *Tilletia spp.* such as *T. tritici,* and *T. laevis* (e.g. active against wheat) *Sclerophthora spp.* such as S. *rayssiae,* and S. *graminicola* (e.g. active against maize), *Peronosclerospora spp.* such as *P. sorghi* and *P. spontanea* (e.g. active against maize). *Pythium spp.* (e.g. active against maize; rice; sorghum; wheat; barley; oats; rye), *Fusarium spp.* (e.g. active against maize; rice; sorghum; wheat; barley; oats; rye), *Claviceps* spp. such as *C. purpurea* (e.g. active against rye; triticale; wheat; and barley), *C. africana* (e.g. active against sorghum), *C. gigantea* (e.g. active against maize), *Gibberella spp.* such as G. *Avenacea* (e.g. active against maize), *Burkholderia glumae* (e.g. active against rice) *Pseudomonas fuscovaginae* (e.g. active against rice), *Sclerophthora spp.* such as S. *macrospora* (e.g. active against rice), *Cochliobolus spp.* such as C. *miyabeanus* (e.g. active against rice), *Fusarium spp.* (active against rice, oats, wheat; maize), and the like.

Also described is use of organic carrier particles of wax in the manufacture of a coating composition as defined herein that includes a biological agent as defined herein above. In a preferment of this use, the coating composition is a seed coating composition. In a further preferment of this use the coating composition is a storage organ coating composition wherein the storage organ is selected from tubers, tuberous roots, corms, bulbs and rhizomes. The organic carrier particles are selected from natural waxes, synthetic waxes, and mineral waxes having a melting point of ≥50°C, more preferably of ≥60°C, and most preferably are made up of hard waxes having a melting point of ≥70°C. Suitable waxes of use in this use may be selected from waxes such as carnauba wax, beeswax, montan wax, Chinese wax, shellac wax, spermaceti wax, myricyl palmitate, cetyl palmitate, candelilla wax, castor wax, ouricury wax, wool wax, sugar cane wax, retamo wax, and rice bran wax or a mixture of two or more thereof. Preferably, the seed coating that is employed in this use includes carnauba wax as the organic carrier. Preferably, in this use, the organic carrier particles have a mean volume diameter ≥5µm, such as in the range ≥8µm to 200µm, as herein described.

Also described a method of manufacturing seed coating composition as herein described that comprises
1) selecting an organic carrier material wherein the carrier material is selected from waxes having a melting point of ≥50° Centigrade;
2) comminuting said organic carrier material into particles of a desired mean volume diameter ≥5µm, such as in the range ≥8µm to 200µm; and
3) adding biological agent to the product particles of step 2).

The biological agent of use in this method is selected from a chemical agent which is an arthropodicide such as an insecticide or an acaricide or a mixture thereof, or a chemical fungicide or a fungus species and/or a bacterium species or a mixture of one or more thereof. Suitable fungus species and bacterium species are known and may be selected from *Trichoderma* spp., such as *Trichoderma harzanium* for use on wheat and Bacillus spp. such as *Bacillus subtilis* for use on wheat, and Pseudomonas species such as *P*. *fluorescens* for use on wheat and *P. Chlororaphis* for use on barley and oats and other monocotyledonous plants (available from BioAgri AB, Uppsala, Sweden), *Burkholderia spp.* such as *B. cepaciatype* Wisconsin for use on barley, sorghum, and wheat (available as "Deny" from Stine Microbial Products, Memphis, USA; and for use on Maize *B. cepaciatype* available as "Intercept" from Soil Technologies Corp., Fairfield, USA), and the like.

Suitable fungicides are known for use in monocotyledonous seed treatments for maize include fludioxonil [4-(2,2-difluoro-1,3-benzodioxol-4-yl)-1*H*-pyrrole-3-carbonitrile], mefenoxam [methyl *N*-(methoxyacetyl)-*N*-(2,6-xylyl)-D-alaninate], azoxystrobin [methyl (2*E*)-2-{2-[6-(2-cyanophenoxy)pyrimidin-4-yloxy]phenyl}-3-methoxyacrylate], captan [(3aR,7aS)-2-[(trichloromethyl)sulfanyl]-3a,4,7,7a-tetrahydro-1*H*-isoindole-1,3(2*H*)-dione], carboxin [5,6-dihydro-2-methyl-1,4-oxathiine-3-carboxanilide], maneb [manganese ethylenebis(dithiocarbamate) (polymeric)], metalaxyl [methyl *N*-(methoxyacetyl)-*N*-(2,6-xylyl)-DL-alaninate], oxadixyl [2-methoxy-*N*-(2-oxo-1,3-oxazolidin-3-yl)acet-2',6'-xylidide],PCNB [pentachloronitrobenzene] and Thiram [tetramethylthiuram disulfide or bis(dimethylthiocarbamoyl) disulfide]; for rice carboxin [5,6-dihydro-2-methyl-1,4-oxathiine-3-carboxanilide], mancozeb [manganese ethylenebis(dithiocarbamate) (polymeric) complex with zinc salt], metalaxyl [methyl *N*-(methoxyacetyl)-*N*-(2,6-xylyl)-DL-alaninate], and PCNB [pentachloronitrobenzene] and Thiram [tetramethylthiuram disulfide or bis(dimethylthiocarbamoyl) disulfide]; for sorghum captan [(3aR,7aS)-2-[(trichloromethyl)sulfanyl]-3a,4,7,7a-tetrahydro-1*H*-isoindole-1,3(2*H*)-dione], mancozeb [manganese ethylenebis(dithiocarbamate) (polymeric) complex with zinc salt], metalaxyl [methyl *N*-(methoxyacetyl)-*N*-(2,6-xylyl)-DL-alaninate], oxadixyl [2-methoxy-N-(2-oxo-1,3-oxazolidin-3-yl)acet-2',6'-xylidide], and PCNB [pentachloronitrobenzene]; for wheat captan [(3aR,7aS)-2-[(trichloromethyl)sulfanyl]-3a,4,7,7a-tetrahydro-1*H*-isoindole-1,3(2*H*)-dione], tiabendazole (also known as TBZ)[2-(thiazol-4-yl)benzimidazole or 2-(1,3-thiazol-4-yl) benzimidazole, metalaxyl [methyl *N*-(methoxyacetyl)-*N*-(2,6-xylyl)-DL-alaninate], oxadixyl [2-methoxy-*N*-(2-oxo-1,3-oxazolidin-3-yl)acet-2',6'-xylidide] and triadimenol [(1*RS,*2*RS*; 1*RS*,2*SR*)-1-(4-chlorophenoxy)-3,3-dimethyl-1-(1*H*-1,2,4-triazol-1-yl)butan-2-ol]; and for barley, oats, and rye imazolil (*RS*)-1-(β-allyloxy-2,4 dichlorophenethyl) imidazole or allyl (*RS*)-1-(2,4-dichlorophenyl)-2-imidazol-1-ylethyl ether, mancozeb [manganese ethylenebis(dithiocarbamate) (polymeric) complex with zinc salt], maneb [manganese ethylenebis (dithio-carbamate) (polymeric)], PCNB [pentachloronitrobenzene], Thiram [tetramethylthiuram disulfide or bis(dimethylthiocarbamoyl) disulfide], Triadimenol (1*RS,2RS*;1*RS*,2*SR*)-1-(4-chlorophenoxy)-3,3-dimethyl-1-(1*H*-1,2,4-triazol-1-yl)butan-2-ol, and difenoconazole 3-chloro-4-[(2*RS*,4*RS*;2*RS*,4*SR*)-4-methyl-2-(1*H*-1,2,4-triazol-1-ylmethyl)-1,3-dioxolan-2-yl]phenyl 4-chlorophenyl ether.

Suitable insecticides are also known for use on monocotyledonous crops as seed treatments such as thiamethoxam [(*EZ*)-3-(2-chloro-1,3-thiazol-5-ylmethyl)-5-methyl-1,3,5-oxadiazinan-4-ylidene(nitro)amine] for rice and maize; imidacloprid [(*E*)-1-(6-chloro-3-pyridylmethyl)-*N-*nitroimidazolidin-2-ylideneamine], methiocarb [4-methylthio-3,5-xylyl methylcarbamate], and thiodicarb [(3*EZ*,12*EZ*)-3,7,9,13-tetramethyl-5,11-dioxa-2,8,14-trithia-4,7,9,12-tetraazapentadeca-3,12-diene-6,10-dione] for maize, and cereals crops (rye, wheat, oats, and triticale), and clothianidin [(*E*)-1-(2-chloro-1,3-thiazol-5-ylmethyl)-3-methyl-2-nitroguanidine] for maize and cereals (rye, oats, wheat and triticale), cipermethrin [(*RS*)-α-cyano-3-phenoxybenzyl (1*RS*,3*RS*;1*RS*,3*SR*)-3-(2,2-dichlorovinyl)-2,2dimethylcyclopropanecarboxylate or (*RS*)-α-cyano-3-phenoxybenzyl (1*RS*)-*cis-trans-*3-(2,2-dichlorovinyl)-2,2-dimethylcyclopropanecarboxylate] for wheat.

The organic carrier material in this method may be selected from waxes such as from those waxes as hereinbefore described. Suitable waxes may be selected from waxes such as carnauba wax, beeswax, montan wax, Chinese wax, shellac wax, spermaceti wax, myricyl palmitate, cetyl palmitate, candelilla wax, castor wax, ouricury wax, wool wax, sugar cane wax, retamo wax, and rice bran wax or a mixture of two or more thereof. Preferably, the wax carrier particles of use in this aspect of the invention comprise dry particles of carnauba wax, ouricury wax, and rice bran wax or a mixture of two or more thereof. Preferably, the selected carrier material is carnauba wax.

Also described is a seed coating composition produced by the method as described herein.

Also described is a coating composition as described herein for use on monocotyledonous seeds.

In a further aspect of the invention there is provided a method of coating a monocotyledonous seed with a coating composition in dry powder form, wherein the composition comprises an organic carrier material in the form of particles having a volume mean diameter of 8 to 200 µm, the carrier material being selected from carnauba wax, beeswax, montan wax, Chinese wax, shellac wax, spermaceti wax, candelilla wax, castor wax, ouricury wax and rice bran wax or a mixture of two or more thereof, and at least one biological agent which has an activity against at least one pathogen of a monocolyledonous plant and which is selected from insecticides, acaricides, fungicides, bactericides and live biological agents, the method comprising the steps of adding a biological agent to the organic carrier material, mixing the two components together and applying the resulting composition to monocotyledonous seeds.

Thus, the seed coating composition of use in the invention is applied in dry particulate form. Naturally, the skilled addressee will appreciate that the organic carrier material may also contain added pigments, plasticisers and other minor components as herein described. In an alternative, the seed coating may be applied in liquid form as herein described and then the seeds dried, leaving a coating composition that is in dry particulate form when on the seed. However, it is preferred that the coating composition is applied in dry, particulate form for ease of application and production costs are kept low. Preferably, the organic carrier material is carnauba wax in dry particulate form.

There now follow examples that illustrate the invention. It is to be understood that the examples are not to be construed as limiting the invention in any way.

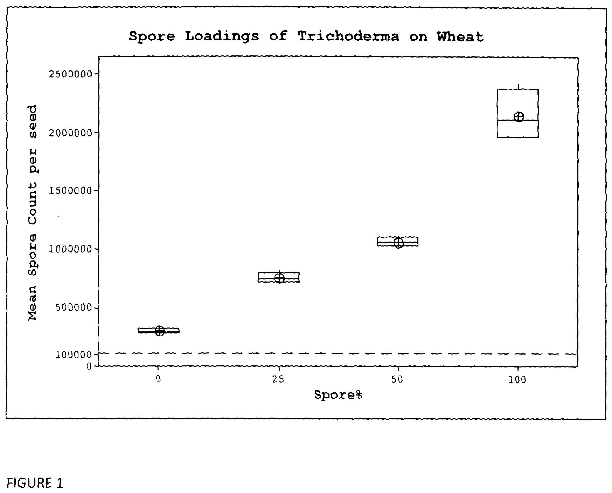

FIGURE 1: Spore loadings of *Trichoderma* on wheat

### Examples Section

Control of *Alternaria* sp. of wheat (*Triticum aestivum*) [available from the United Kingdom National Culture Collection (UKNCC)] by means of seed treatments using examples of the antagonists *Trichoderma harzianum, Pseudomonas fluorescens* and *Bacillus subtilis* [available from United Kingdom National Culture Collection (UKNCC)]

### Alternaria Leaf Blight

### Symptoms

Lower most leaves are always the first to show the sign of infection, which gradually spreads to the upper leaves. The disease first makes it appearance as small, oval, discoloured lesions, irregularly scattered on the leaves. The spots became irregular in shape as these enlarge and take up dark brown to grey colour. As the disease progresses, several spots come closer and cover large leaf areas, eventually resulting In death of the entire leaf. A bright yellow marginal zone is sometimes seen around the spots. In case of severe attack, leaf sheaths, awns and glumes are also infected.

Black powdery spores of the fungus cover the lesions at this stage under moist conditions. These spores are disseminated by wind and cause disease on healthy leaves and plants. The disease spreads very fast under warm and humid conditions. Heavily infected fields present a burnt appearance.

### Disadvantages of Conventional Seed Treatment

**i) Limited dose capacity** - The amount of pesticide that can be applied is limited by how much will actually stick to the seed.
**ii) Limited duration of protection** - The duration is often short due to the relatively small amount of biological agent (e.g. chemical) applied to the seed, dilution of the biological **agent** as the plant grows, and breakdown of the biological agent.
**iii) Limited shelf life of treated seed** - Producing excess treated seed is undesirable because the shelf life of treated seed may be limited. Surplus treated seed cannot be sold for grain.

All three of these limitations may be overcome or significantly reduced through the inclusion of carnauba wax particles as a carrier for a biological agent, in this case dormant microorganisms that are applied to seeds. Under favourable conditions, the microorganisms grow and colonize the exterior of the developing seed or seedling. Biological agents may help in reducing seed decay, seedling diseases, or root rot.

The following tests are performed to examine the potential effect of the inclusion of carnauba wax particles.

### Phase One - Isolate Cultures

### 1. Culture Maintenance

Records are kept with each isolate sub-culture being assigned an accession number. All plates and slides relating to that sub-culture are labelled with an accession number.

In addition, permanent lactophenol (LP) mount slide are made from each of the original cultures and file for reference purposes

No more than three generations of sub-culture occur before passaging through a living host and re-isolating in order to maintain the fitness of the organism.

Sub-cultures are stored for future use on Potato Dextrose Agar (PDA) at 4°c.

Each isolate is assigned an accession number and sub-cultures are labelled with that number.

DNA is extracted for identity verifications and stored at -20°C. A reference sample of the pure culture is stored on glycerol at -20°C. Upon completion of the experiment DNA identification of the culture is repeated to confirm that the organism has not mutated during the course of the work.

### 2. Culturing of the causal agent

Isolation of a pathogenic fungus from diseased tissue into pure culture is one of the standard techniques in identifying and describing a disease. It is an essential step in proving the pathogenicity of previously un-encountered organisms.

Techniques commonly involve:
a. Surface-sterilisation treatment
b. Plating (possibly on selective medium) of samples of diseased tissue, with appropriate precautions.
c. Sub-culturing to get pure cultures.

### 3. Purification of Cultures

Small disinfected root pieces of an artificially inoculated plant are cultured on water agar. The fungal colonies that appear most frequently are likely the target pathogen. Several saprophytes may also be present in infected plant tissues and they may grow into the medium with the principal pathogen. Routine surface-sterilisation consists of wiping the tissue with (or immersing in) 0.1% solution of sodium hypochlorite (NaOCl or sometimes referred to as "NaClO") followed by rinsing with sterile distilled water. To obtain a pure culture of the pathogen, a small sample is taken from the growing edge of a colony with a flamed loop or scalpel and streaked over the surface of a pre-poured plate of PDA. The inclusion of chloramphenicol (a bacteriostatic anti-microbial) at 30mg/l reduces the risk of bacterial contamination. As the streak progresses over the agar, fungal spores are separated until single spores are obtained from which separate colonies will grow.

Repeat this procedure until pure cultures are obtained.

### 4. Single Spore Isolation

Single spore isolations are important to investigate pathogenic variability. An inoculum of spores is placed in a tube containing 10 ml of sterile water. This spore suspension is streaked along a marked line on the surface of a thin tap water agar medium, and incubated at 22°C. After 24hr incubation, select germinated spores using a stereoscopic microscope and transferred one spore at a time to another agar plate.

### 5. Slide Preparation for Microscopic examination and reference

Identification of the pathogen: the tissue may be sectioned or surface scraped and then mounted in water/lactophenol. Fungal structures seen macroscopically may be separated from the host tissue to be examined and identified. Identification depends on spore formation and therefore infected material will be incubated in a moist environment overnight prior to examination in order to encourage sporulation. Cotton blue stain will be added to the lactophenol in order to highlight fungal structure. The specimen will be placed in a drop of satin on a glass slide and gently warmed by passing through a low flame for a few seconds before mounting in lactophenol.

Whole mount sections can be cleared and stained for ease of identification using the following method:
Leaf disks are made clear by heating them in tubes in lactophenol until clear (up to 20 minutes), without boiling. Stain by heating in 0.5% cotton blue in lactophenol on a slide for 5-10 minutes. Rinse thoroughly in lactophenol and mount in the same.

### 6. Growth and Media

Sub-cultures are assessed for growth and germination at a range of temperatures, 13.5°C, 18°C and 22.5°C. A range of media is examined for suitability. Whilst PDA is generally suitable for most fungal species it has been found that use of a low nutrient agar, such as tap-water agar, reduce prolific growth and can encourage sporulation. Therefore PDA, tap-water agar, and a selective media from literature, Czapek's Dox agar (Dawson (1962) Saboutaudia 1. 214-219), are included within the assessment trials.

A 5mm diameter disk is cut from the margin of an actively growing culture using a flamed cork borer. This is placed upside down in the centre of the pre-poured media plates. Five replicates are made for each media type and temperature (45 plates in total). Complete randomisation will be applied to plates in each incubator. Plates are observed until one culture succeeds in completely covering the plate in any one media. At this point the following measurements are taken: fungus colony diameter, colour and margin. In addition, the level of sporulation is recorded.

Five 5mm disks are cut from each plate using a flamed cork borer and suspended in 20ml of distilled water (+0.05% Tween 20®). The sample is then sonicated for 2 minutes to release the spores and then vortexed to aid the formation of a uniform spore suspension. Samples are assessed for spore concentration using an Improved Neubauer haemocytometer using standard counting methodology.

The mean for each media type is calculated and ANOVA is applied to examine the results for significant differences.

### Phase Two - In vitro studies:

### 1. Screen microorganisms and carnauba wax to determine interactions

In order to explain effects observed the microorganisms, pathogens and antagonists, are screened against carnauba wax to identify any carrier only effect. This will enable the determination of treatment effect as well as any synergy occurring as a result of the use of using an antagonist with carnauba wax particles.
a. Plates of appropriate media are used based on the findings of the experiment above. Air-milled carnauba wax is sterilised using the autoclave and then ground using a twin blade mill, producing particles with an approximate VMD of The sterilised media is then cooled to 50°C (molten stage). The carnauba wax is then incorporated into the media. Two concentrations of carnauba wax are tested; 1g/l and 10g/l. A 5mm diameter disk is cut from the margin of an actively growing culture using a flamed cork borer. This is placed upside down in the centre of the pre-poured media/camauba wax plates. Five replicates will be made for each concentration and incubated at the optimum temperature for growth/sporulation (as determined in previous experiment). Growth rates and characteristics are compared to the controls using data from the Growth and Media experiment above.

Differences will be analysed using ANOVA.
b. Disks of the pathogen and antagonists are dusted with different carnauba wax treatments and put on appropriate media. The carnauba wax particles need to be free of microorganisms to be able to carry out this experiment. Growth of treated and untreated organisms are compared.

### 2. Investigate antagonist action against pathogens

### i. Effect of antagonists on viability of Alternaria sp. mycelium (in vitro assay I)

All antagonistic isolates are tested in a dual culture assay against pathogenic fungi on PDA or alternative pre-defined media. Agar plugs of *Alternaria* sp. and the antagonist isolate to be tested are arranged 7 cm apart on 9cm agar plates. Inhibition zones and zones of overlapping are assessed after 7 days incubation at 13.5°C, 18°C and 22.58°C. Where an antagonist overgrows the mycelium of *Alternaria* sp., the zone of hyphal interaction between both is investigated microscopically (100x). Fungal strains without a microscopically visible effect on mycelium of *Alternaria* sp. are excluded from further experiments. Furthermore, the viability of *Alternaria* sp. in the region of interaction is tested by transfer of mycelial discs onto water agar plates 5 days after first contact. The *Alternaria* sp. mycelium is assessed as viable when the growth of typical hyphae is observed microscopically (100x). Each experiment is repeated three times with three samples per replicate.

### ii. Effect of antagonists on germination of Alternaria sp. sclerotia produced in vitro (in vitro assay II)

Sclerotia of *Alternaria* sp. of uniform size are placed on a 6 day old culture (PDA, 20°C) of the fungal antagonist. After incubation for 14, 28 and 35 days at 20°C, eight sclerotia per replicate (three replicates per antagonist) are transferred from the agar plate onto water agar. Mycelial growth from these sclerotia is assessed under a light microscope (100x).

### 3. Confirmation of pathogenicity

Steps to perform Koch's postulates (Koch 1890, criteria designed to establish a causal relationship between a causative microbe and a disease)
a) Describe the symptoms expressed by the diseased crop plants.
b) Isolate the suspected pathogen-the same cultures should be isolated from plants with similar symptoms
c) Obtain a pure culture and use it to inoculate healthy plant material.
d) Observe the symptoms expressed by the inoculated plants-symptoms should be the same as those observed originally in the crop plants.
e) Re-isolate the pathogen from the newly diseased material. The culture should be the same as the original purified culture.

### i. Indirect Application - Plant

Using healthy plants - soil can be inoculated directly using a spore suspension made from a pure agar culture or from a culture grown in flasks. A fungal spore or bacterial suspension can be added post-emergence so that the root system is drenched by the suspension. Plants are then observed over 7 days and symptoms recorded. Koch's Postulates are applied in order to confirm that the symptoms relate to the inoculated pathogen.

### ii. Direct Application - Seed

Inoculum for preparing spore suspensions is grown on water agar containing sterile seeds. Fungal spores and hyphae or bacterial spore and vegetative growth are scraped from the colony and transfer to sterile water. This spore suspension is then applied to seeds and mixed to ensure a uniform distribution. Seeds are then:
- Placed on moist filter paper and incubated at optimum growth temperature for 5 days.
- sown in heat sterilised potting compost and incubated in a propagator at optimum growth temperature for 7 days
Symptom expression and germination is recorded for both sets of experiments and Koch's postulates applied

### 4. Carnauba Wax/Antagonist co-location analysis

A dry powder formulation of spores is produced using a spore separator. Moisture content of the formulation is reduced to below 5% using a dehumidifier and silica beads. Spore concentration is determined using a Neubauer haemocytometer and standardised counting methodology.

Steps in Air Milling in Boyes Micronisation Process (for carnauba wax particles with a VMD of approx. 25µm and 75µm)
1. 2kg carnauba wax blocks are first kibbled into approximately 4 to 6mm pieces in a KT Handling Ltd Model 04 kibbler (serial no. 729/C) following the manufacturer's instructions.
2. The kibbled pieces are then passed through an Apex Construction Ltd Model 314.2 Comminuting Mill (serial no. A21306) and reduced further in size to a range of 250 to 300um.
3. The comminuted particles are then passed through a Hosokawa Micron Ltd Alpine 100AFG jet mill (serial no. 168092) following the manufacturer's instructions, setting the mill at a suitable speed (a speed of 8000rpm for particles having a VMD of 15µm or at a speed of 2500rpm for particles having a VMD of 75µm), with a positive system pressure of 0.03bar.
4. The grinding air is to be kept to 6 bar, the system rinsing air flow and Classifying Wheel gap rinsing air are both to be set at a minimum of 0.5 bar and no more than 0.75bar, the cleaning air filter is to register a delta of no more than 5bar to achieve a final particle size with a VMD of 15um or 75µm as required.

Entostat was combined with wheat seed at three loadings (see below).

Two sizes of carnauba wax particle having VMDs of 15µm and 75µm, respectively, are examined in combination with the spore formulation at two different ratios (1:3, 2:2). Samples of the carnauba wax/spore mixture are analysed using electron photomicroscopy to determine the co-location effect. Any variation observed is recorded.

In addition, both sizes of carnauba wax referred to, are mixed with a homogenised sample of mycelium and examined as described above.

### 5. Carnauba Wax Particle loading

Carnauba wax particle adhesion to seeds is approximated through the use of photomicroscopy (qualitative) and fluorometric analysis (quantitative). Two sizes of carnauba wax particles (with 1% glo-brite) are used having a VMD of 15µm and 75µm, respectively. Four combinations: Two ratios of carnauba wax/spore formulation, together with one mycelial and a vehicle control (carnauba wax only), makes a total of eight treatments. Treatments are applied to 10g of seed and replicated three times. Three subsamples are taken from each replicate and the mean used in analysis.

For fluorometric analysis three 1g samples are each added to 5ml of ethanol and sonicated to aid the release of the carnauba wax particles from the seeds. Samples are analysed using a Perkin Elmer L55 Fluorometer (Perkin Elmer, Ma, USA). Statistical analysis of variation between treatments is performed using ANOVA.

Seed size and architecture varies greatly between crop species and this influences application rates and method. A homogeneous mix is attained through tumbling seed and carnauba wax formulation in a cylinder, adapted to produce lateral mixing/tumbling through the inclusion of angled interior vanes, placed on a Wheaton roller for 5 minutes.

### Phase Three - In vivo:

*Alternaria* sp., together with the most successful antagonist model are used in a series of in vivo experiments. The basic design is a split-plot experiment with temperature being the main plot factor (13.5°C, 18°C and 22.5°C) and carnauba wax/antagonist ratio (3 treatments: 2x spore, 1x mycelial) being the sub-plot. Four homogeneous mixes of each treatment are prepared using the method described above and these represent the replicates.

### Treatments:

1) Application rate 1 - 7.5 x 10⁶ conidia kg⁻¹
2) Application rate 2 - 7.5 x 10⁸ conidia kg⁻¹
3) Application 3 - Mycelia
4) Control 1 - Vehicle control (Carnauba wax only)
5) Control 2 - no treatment

Mixes (true replicates): A, B, C, D
Subsamples of each mix: α, β, γ

Mixes and treatments are arranged according to a Randomised Block design.

### Pot studies

Each temperature (growth chamber) contains 60 plant pots.

Treated seed is sown in accordance with supplier's recommendation. Soil/compost (1:1 John Innes No.2 and peat compost) is heat sterilised prior to inoculation with 10ml of *Alternaria* sp. spore suspension and thoroughly mixed before sowing.

Plants are placed in the growth chambers for a period of 21 days with observations of symptom expression made every 48 hours post emergence. Water is applied through capillary matting twice daily.

After 21 days plants are removed from their pots and the following assessment measurements taken:
- % germination
- % pre-emergence damping off
- % post-emergence damping off
- Root weight
- Shoot weight

In addition, symptom expression is assessed based on a damage scale.
Means of the measurements taken from the subsamples α, β, γ are compared for each treatment using ANOVA.
Samples are taken from 5 plants exhibiting symptoms and Koch's Postulates applied to confirm the causal organism (by comparison to the reference slide of the master culture). The experiment is repeated.

### Second Example

Control of *Pythium graminicola* [United Kingdom National Culture Collection (UKNCC)] on wheat (*Triticum aestivum*) by means of seed treatments using fludioxonil.

### Experimental Design - as per the Pot Study in Example 1, above

Carnauba wax is melted using copper pans. During cooling fludinoxonil is added at 1% of the mass of the carnauba. This mixture is allowed to solidify before chipping and processing through an air mill as described above, with the exception that the speed is set at 6000 rpm to produce particles with a VMD of 25µm.

### Treatments for the Pot Study-

Control 1 - Vehicle control (Carnauba wax only)
Control 2 - no treatment
Treatment 1 - 1% fludinoxonil carnauba wax at 10g per kg of seed
Treatment 2 - 1% fludinoxonil carnauba wax at 3.2g per kg of seed
Assessment and analysis as with previous Pot Study

### Third Example

### Relating to:

Control of *Agriotes Mancus* spp. (Coleoptera: Elateridae), or Wheat Wireworm, (the larval form of the click beetle) that preys on wheat (*Triticum aestivum*), by means of seed treatments using thiamethoxam.

Early-season wireworm damage consists of hollowed-out seeds where larvae have entered during germination. Seedling plants also can be injured or killed by larvae tunnelling into the plant below the soil line. Occasionally, wireworms bore into the stalks of larger plants and tunnel in a few inches, but the damage is not significant.

### Experimental Design - as Pot Study above

Carnauba wax is melted using copper pans. During cooling thiamethoxam is added at 1% of the mass of the carnauba. This mixture is allowed to solidify before chipping and processing through a mill as decribed above (speed set at 6000 rpm) to produce particles with a VMD of 25µm.

### Treatments for the Pot Study-

Control 1 - Vehicle control (Carnauba wax only)
Control 2 - no treatment
Treatment 1 - 1% thiamethoxam carnauba wax at 4.2g per kg of seed
Treatment 2 - 1% thiamethoxam carnauba wax at 1.3g per kg of seed

Empty pots are lined with a nylon mesh screening material before filling with potting soil. A wire frame is constructed and the nylon meshed tied off over the frame to provide a caged experimental arena designed so that the insect cannot escape the treated area.

Seeds are allowed to germinate for three days before adding five 3^{rd} instar larvae to the soil surface of each pot before resealing the mesh cage.

Observations are made over 21 days.

Plants are assessed for:
- % germination
- Damage
- Root weight
- Shoot weight

The procedures detailed within Example One are followed to examine the antagonistic effect of *Trichoderma harzianum* [United Kingdom National Culture Collection (UKNCC)], *Pseudomonas fluorescens* [UKNCC] and *Bacillus subtilis* [UKNCC] on *Fusarium* sp., a fungal pathogen of Rice (*Oryza sativa*).

The procedures detailed within Example One are followed to examine the antagonistic effect of *Trichoderma harzianum* [United Kingdom National Culture Collection (UKNCC)], *Pseudomonas fluorescens* [UKNCC] and *Bacillus subtilis* [UKNCC] on *Colletotrichum graminicola.,* a fungal pathogen of Sorghum (*Sorghum bicolor*).

The procedures detailed within Example Two are followed to examine the effect of metalaxyl on *Pythium* sp., a fungal pathogen of Rice (*Oryza sativa*).

The procedures detailed within Example Two are followed to examine the effect of prochloraz on *Rhizoctonia* sp., a fungal pathogen of sorghum (*Sorghum bicolor*)*.*

The procedures detailed within Example Three are followed to examine the effect of thiamethoxam on the White Grub (*Phyllophaga crinite*), an insect pest of Sorghum (*Sorghum bicolor*).

The procedures detailed within Example Three are followed to examine the effect of imidacloprid/beta-cyfluthrin on Rice Seed Midges (*Cricotopus sylvestris*), an insect pest of Rice (*Oryza* sativa).

### Suppression of causal agents of fungal disease in Wheat (Triticum aestivum) using a seed coating comprised of Trichoderma sp. and carnauba wax particles

The potential for *Trichoderma* sp. (Ascomycota) as a biocontrol agent in the defence against plant pathogens is known.

*Trichoderma* hyphae are capable of penetrating the hyphae of other fungi and extracting nutrients from within, resulting in the suppression and eventual death of the host. Trichoderma exhibits rapid mycelial growth and is capable of out-competing other fungi for nutrients.

There are several commercially available formulations of Trichoderma marketed as crop protection products. These are commonly supplied as a wettable powder formulation and applied to the area of cultivation as a drench. The disadvantage of this form of application is that it is necessary to treat the entire cultivation area, whereas it is the region immediately surrounding the seed or plant that requires the treatment. The larger the number of conidia delivered to this area the greater the level of control they are able to impart. Therefore a targeted application system able to deliver sufficient conidia to the required area offers a distinct advantage in the use of *Trichoderma* over conventional applications.

### Experimental Aim: To assess the potential use of Entostat as a seed-coating technology for the delivery of beneficial microbes

### Methods

Steps in Air Milling in Boyes Micronisation Process (for carnauba wax particles with a VMD of approx. 10µm)
1. 2kg carnauba wax blocks are first kibbled into approximately 4 to 6mm pieces in a KT Handling Ltd Model 04 kibbler (serial no. 729/C) following the manufacturer's instructions.
2. The kibbled pieces are then passed through an Apex Construction Ltd Model 314.2 Comminuting Mill (serial no. A21306) and reduced further in size to a range of 250 to 300um.
3. The comminuted particles are then passed through a Hosokawa Micron Ltd Alpine 100AFG jet mill (serial no. 168092) following the manufacturer's instructions, setting the mill at a speed of 12500rpm, with a positive system pressure of 0.03bar.
4. The grinding air is to be kept to 6 bar, the system rinsing air flow and Classifying Wheel gap rinsing air are both to be set at a minimum of 0.5 bar and no more than 0.75bar, the cleaning air filter is to register a delta of no more than 5bar to achieve a final particle size with a VMD of 9.7µm.

Entostat was combined with wheat seed at three loadings (see below).

### 1. Baseline data: seed coating techniques

*1.1. Seed Coating. Trichoderma harzianum* (containing 7.75x10⁹ colony forming units g⁻¹ Sylvan Bio, Loches, France) with a germination percentage of 95% was applied to wheat (var. Hereward, Herbiseeds, Twyford, UK) using carnauba wax particles with a VMD of 9.7µm. A target loading was set at 10⁵ conidia per seed based on information obtained from literature.
   Carnauba particles were mixed with the dry conidia powder at different ratios and applied 0.01g (0.2% by mass) directly to dry seed, 5g of seeds per concentration. For each concentration, four batches of 10 seeds were used for evaluation of conidia loading.
   Conidia to carnauba ratios used were:
   100% Conidia, 50% Conidia, 25% Conidia and 9% Conidia with the remainder in each case being made up of carnauba wax particles.
*1.2. Enumeration.* Direct enumeration to determine conidia loading of seeds was done through the use of a haemocytometer (Improved Neubauer, Hawksley, Lancing, UK). *Inoculum: Preparation* of *suspension.*
   Propagules are usually formulated in a water carrier, although those with hydrophobic cell walls (such as *Trichoderma*) are not readily suspended in water. To uniformly suspend hydrophobic propagules in water it is necessary to sonicate and/or use mechanical suspension methods. Mechanical suspension of propagules using micropestles provides good suspension of conidia in water without causing damage to cells. A surfactant may also facilitate suspension of propagules (Tween20 at 0.05%). To suspend hydrophobic conidia, harvested conidia are placed in a 1.5ml microcentrifuge tube, =0.5ml of sterile water is added to the tube, the micropestle is inserted into the tube, and the conidial mass is gently agitated with the micropestle by hand (prevents liberation of conidia into air). The micropestle is the attached to the motor (e.g. Kontes, Argos pellet pestle motor) and the suspension is vigorously agitated while moving the pestle in and up and down, and side to side motion, circa. 30 seconds. Since the haemocytometer method does not distinguish between viable and non-viable propagules, it is necessary to determine spore viability so that doses can be prepared on the basis of viable propagules.
   Seed washes and enumeration of Trichoderma loadings were done on 4 batches of seeds per treatment. Inoculum was washed from seeds by placing into 1 ml sterile 0.05% Tween²⁰ (or substitute - similar non-ionic surfactant/dispersal agent) in a Eppendorf tube and vortexing for 30 seconds to remove conidia from the seed surface. Samples were then sonicated for two minutes to break up any conidial clumping. Counts obtained were used to calculate the mean conidia loading of seed coated with the various treatments. Results obtained using 100% conidia powder were used as a benchmark and the conidia/carnauba combination powders compared against it as a determination of efficiency of loading.
   *Confirmation of conidial viability* was achieved by dilution plating on Trichoderma Specific Media (TSM) (see below). A dilution series was set up and duplicate plates inoculated from the series. Colony Forming Units (CFU) counts were made after 7 days, allowing inoculum levels on seeds to be quantified. In addition, fresh, unused conidia were plated to provide a comparison of before and after seed application.
   *Germination percentage* was also measured. A satisfactory density of conidia was obtained by spreading approximately 10⁶ conidia in 100µl on the media in a 9cm petri dish. Conidia were incubated in the dark at 25°C for five days, and the area to be observed was then fixed using lactophenol. Phase contrast microscopy using an inverted compound microscope enabled sufficient examination of the conidia.
   Conidia were considered viable if germtube lengths were two times the diameter of the propagule in question. Numbers of germinated and non-germinated conidia in arbitrarily-selected fields of view or in parallel transects, defined with an ocular micrometer, were counted. A minimum of 300 conidia were counted to provide an accurate estimate. It is desirable to determine the viability of propagules on replicate cultures and at various positions on the same plate.
   This allowed calibration of the seed-coating techniques to obtain similar levels of *Trichoderma* loadings on the seeds for each coating method.
*1.3. Seed Germination.* One batch (5 seeds) of seeds from each treatment was placed on seed test paper (Whatman 181) in a 9cm Petri dish. Dishes were sealed with Parafilm and held at 20°C for 7-10 days and germination rate determined. This was repeated with untreated seed.

Trichoderma Selective Media (adapted from Williams, Clarkson et al 2003) was prepared as follows:
For 1000ml

### Basal Medium Ingredients:

| | |
|---|---|
| 0.2g MgSO₄ | 3.0g glucose |
| 0.9g K₂HPO₄ | 0.15g rose bengal |
| 0.15g KCl | 20g agar |
| 1.0g NH₄NO₃ | 950ml distilled water |

### Basal Medium Process

Mix liquid ingredients with all solid ingredients, except the agar in a **1L** Erlenmeyer flask. Add the 20g agar and stir or shake. Plug with cotton wool and cover with foil. Autoclave.

### Biocidal Medium (per litre)

| | |
|---|---|
| 0.25g crystallized chloramphenicol | 1.2ml propamocarb (Previcur) |
| 0.2g quintozene | 50ml sterile distilled water |
| 0.2g captan | |

### Seed Weight

Used as a measure of the homogeneity of the seed batch. Eight replicates of 25 seeds are weighed and the coefficient of variation (Cv) recorded. This coefficient should not exceed a value of 5. If it does then the procedure is repeated and the mean of all 16 samples used to calculate the number of seeds per gram.

| *Crop* | *Mean Weight (g)* | *SD* | *Cv* | *TGW (g)* |
|---|---|---|---|---|
| Wheat | 1.258 | 0.059 | 4.678 | 50.305 |

### Results

### Direct Enumeration Counts using Haemocytometer

Initial Spore Density of *Trichoderma harzianum* dry spore preparation (at 5% moisture content), determined using haemocytometer, was 7.75 x 10⁹ spores g⁻¹ (n=4,±2.6 x 10⁷ 95%CL).

### Spore Counting of Seed Wash

| *Variable* | *Spore%* | *N* | *Mean* | *SE Mean* |
|---|---|---|---|---|
| SporeCount | 9 | 4 | 300750 | 11499 |
| | 25 | 4 | 757750 | 21453 |
| | 50 | 4 | 1062500 | 18875 |
| | 100 | 4 | 2145000 | 109278 |

| | | | | |
|---|---|---|---|---|
| *10⁵ target spores per seed | | | | |

There was a clear and statistically significant difference between the mean spore counts per seed achieved by the different treatments as determined by one-way ANOVA (F(3,12)= 190.83, p= <0.001). All treatments exceeded the target of 10⁵ spores seed⁻¹.

| *% Spores* | *Mean Spore Count Seed^{- 1}* | **Expected Spore Count* | *As a % of 100% Treatment* | ***As a % of Expected* | *t value* | *p value* |
|---|---|---|---|---|---|---|
| 100% | 905250 | n/a | n/a | n/a | n/a | n/a |
| 50% | 1062500 | 1072500 | 50% | 99% | -0.53 | 0.633 |
| 25% * | 757750 | 536250 | 35% | 141% | 10.32 | 0.002 |
| 9% | 300750 | 193050 | 14% | 156% | 9.37 | 0.003 |

| | | | | | | |
|---|---|---|---|---|---|---|
| *Expected Spore Count is calculated from the mean spore count achieved by the 100% Treatment, assuming a perfect distribution. Therefore the 50% Treatment would be expected to result in half the spores of the 100% Treatment, and so on. **Essentially a measure of improvement in spore adhesion efficiency. | | | | | | |

The addition of Entostat above 50% appears to improve the efficiency of spore adhesion to seed as the actual mean counts significantly exceed the expected results based on the 100% spore treatment (t-test).

### Germination Determination

Mean conidia germination (from a sample of 300)
Fresh conidia - 276.50 ±10.85, n=4
Seed wash conidia - 275.25 ±6.02, n=4

There was no statistically significant difference between the viability of fresh conidia and those washed from seeds as determined by one-way ANOVA (F(1,6) = 0.04, *p* = 0.847).

### Enumeration estimate from CFU counts

Comparison of Haemocytometer and CFU (corrected for dilution) counts

| *Treatment* | *N* | *Mean* | *SE Mean* | *Grouping (using Tukey method)* |
|---|---|---|---|---|
| 100CFU | 4 | 2150000 | 83964 | A |
| 100Haemo | 4 | 2145000 | 109278 | A |
| 50CFU | 4 | 1060000 | 12910 | B |
| 50Haemo | 4 | 1062500 | 18875 | B |
| 25CFU | 4 | 787500 | 15058 | C |
| 25Haemo | 4 | 757750 | 21453 | C |
| 9CFU | 4 | 303250 | 9059 | D |
| 9Haemo | 4 | 300750 | 11499 | D |

Means that do not share a letter are significantly different.

There was a statistically significant difference between groups as determined by one-way ANOVA (F(7,24) = 205.95, p = <0.001). A Tukey post-hoc test revealed significance was as a result of differences in the spore% rather than the counting method applied.

### Summary

Wheat seed can be coated with Trichoderma spores in excess the target 10⁵ spores seed⁻¹ for all treatments.

Use of Entostat at a ratio greater than 1:1 increases the efficiency of spore delivery as a result of a reduction in wasted or lost spores.

The germination viability of the spores was unaffected by their use as a seed coating.

Enumeration through direct counting of spores using a haemocytometer or through the use of CFU counting gives statistically similar results and therefore either method may be used once germination viability has been proved unaffected by the treatment.

The described method for wheat as provided above is used to assess the delivery efficiency of spores by Entostat to seeds of barley, rye, oats, maize and rye grass. Similar or better results are obtained, depending on loading and seed size.

### Effects of seed coating on disease suppression

Seeds are coated with *Trichoderma* using water or Entostat to achieve loadings of ca. 10⁵ and 10⁶ CFUs seed⁻¹. Water treatments are suspensions of spores in sterile water in which the seed samples are soaked for one hour. Seeds are then dried back, a likely commercial scenario, or sown wet coated. Entostat is applied at ratios of 3:1, and 9:1, Entostat to spores respectively. Seed treatment methods are then compared for their ability to protect germinating wheat seedlings from *Gaeumannomyces graminis,* the causal agent of take-all disease in wheat.

Inoculation of seeds with Trichoderma. Wheat seed cv. Hereward is inoculated as follows (target concentration per seed):
1) *Trichoderma* at 10⁵/seed using a water suspension (wet coating)
2) *Trichoderma* at 10⁶/seed using a water suspension (wet coating)
3) *Trichoderma* at 10⁵/seed using a water suspension (dry coating)
4) *Trichoderma* at 10⁶/seed using a water suspension (dry coating)
5) *Trichoderma* at 10⁵/seed using Entostat at 3:1
6) *Trichoderma* at 10⁶/seed using Entostat at 3:1
7) *Trichoderma* at 10⁵/seed using Entostat at 9:1
8) *Trichoderma* at 10⁶/seed using Entostat at 9:1
9) No *Trichoderma,* water only
10) No *Trichoderma,* Entostat only
11) Seed only

*Enumeration. Trichoderma* is quantified using standard dilution plating methods on *Trichoderma* specific media. This confirms CFU loadings per seed for treatments 1-8. Dilution platings are carried out in duplicate.

### Gaeumannomyces bioassay

*Inoculum preparation* - *Gaeumannomyces* sp., known to be pathogenic on wheat, barley, rye, oats and turf grass, is grown on PDA plates from stock cultures, and incubated at 20°C to produce actively growing colonies. Agar plugs are removed from the plates and used to inoculate sterilised (autoclaved at 121°C for 20 mins) John Innes No.2 potting mix (80% moisture content; 60g) mixed with potato cubes (2 mm², 25g) in 500ml Erlenmeyer flasks. Flasks are incubated at 20°C for 14 days. Inoculum levels in the medium are quantified using a dilution plating method.

Effectiveness of seed treatment on Gaeumannomyces. Seeds are sown into individual cells of seed trays containing *Gaeumannomyces* -inoculated medium (approx. 15ml/cell). Four replicate batches of ten seeds per treatment are planted into the cells. Once sown, the trays are placed in a plant growth chamber (Weiss Gallenkamp Fitotron SG120) at 20°C with ca. 16h lighting. Cells are bottom watered. The number of seedlings surviving are recorded every 3 days for 21 days.

Time to emergence, percentage successful emergence and percentage plants expressing symptoms are recorded and the results analysed. Differences in Entostat treated seed and untreated seed are observed.

## Claims

1. Use of a coating composition in dry powder form, wherein the coating composition comprises at least one organic carrier material in the form of particles having a volume mean diameter of 8 to 200 µm, the carrier material being selected from waxes having a melting point of ≥ 50° Centigrade, and at least one biological agent having an activity against at least one pathogen of a monocotyledonous plant as a coating on a seed of a monocotyledonous plant.

2. Use according to claim 1, wherein the biological agent is selected from a chemical agent and a live biological agent or is a mixture thereof.

3. Use according to claim 1 or claim 2, wherein the biological agent is selected from chemical fungicides, arthropodicides and bactericides or is a mixture of two or more thereof.

4. Use according to claim 3, wherein the arthropodicides are insecticides or acaricides.

5. Use according to any one of the preceding claims, wherein the organic carrier material is selected from carnauba wax, beeswax, montan wax, Chinese wax, shellac wax, spermaceti wax, candelilla wax, castor wax, ouricury wax and rice bran wax or is a mixture of two or more thereof.

6. Use according to any one of the preceding claims, wherein the at least one pathogen is a bacterial species, a fungal species or an arthropod species.

7. Use according to claim 1 or claim 2, wherein the biological agent is at least one biological antagonist that is present in the form of bacterial spores and/or fungal spores located on the surface of the said particles.

8. Use according to any one of the preceding claims, wherein the particles have a volume mean diameter of 8 - 40 µm.

9. Use of a coating composition in dry powder form, wherein the coating composition consists of at least one organic carrier material in the form of particles having a volume mean diameter of 8 to 200 µm, the carrier material being selected from waxes having a melting point of ≥ 50° Centigrade, and at least one biological agent having an activity against at least one pathogen of a monocotyledonous plant as a coating on a seed of a monocotyledonous plant.

10. A method of coating a monocotyledonous seed with a seed coating composition in dry powder form, wherein the composition comprises an organic carrier material in the form of particles having a volume mean diameter of 8 to 200 µm, the carrier material being selected from carnauba wax, beeswax, montan wax, Chinese wax, shellac wax, spermaceti wax, candelilla wax, castor wax, ouricury wax and rice bran wax or being a mixture of two or more thereof, and at least one biological agent which has an activity against at least one pathogen of a monocotyledonous plant and which is selected from insecticides, acaricides, fungicides, bactericides and live biological agents, the method comprising the steps of adding the biological agent to the organic carrier material, mixing the two components together and applying the resulting composition to monocotyledonous seeds.

11. A method of coating a monocotyledonous seed with a seed coating composition in dry powder form, wherein the composition consists of an organic carrier material in the form of particles having a volume mean diameter of 8 to 200 µm, the carrier material being selected from carnauba wax, beeswax, montan wax, Chinese wax, shellac wax, spermaceti wax, candelilla wax, castor wax, ouricury wax and rice bran wax or being a mixture of two or more thereof, and at least one biological agent which has an activity against at least one pathogen of a monocotyledonous plant and which is selected from insecticides, acaricides, fungicides, bactericides and live biological agents, the method comprising the steps of adding the biological agent to the organic carrier material, mixing the two components together and applying the resulting composition to monocotyledonous seeds.

12. A monocotyledonous seed coated in a coating composition as defined in any one of claims 1 to 9.

## Patentansprüche

1. Verwendung einer Beschichtungszusammensetzung in Trockenpulverform, wobei die Beschichtungszusammensetzung mindestens ein organisches Trägermaterial in Form von Partikeln mit einem mittleren Volumendurchmesser von 8 bis 200 µm umfasst, wobei das Trägermaterial aus Wachsen mit einem Schmelzpunkt von ≥ 50 °C ausgewählt ist, und mindestens ein biologisches Mittel eine Aktivität gegen mindestens einen Erreger einer einkeimblättrigen Pflanze als eine Beschichtung auf einem Samen einer einkeimblättrigen Pflanze aufweist.

2. Verwendung nach Anspruch 1, wobei das biologische Mittel ausgewählt ist aus einem chemischen Mittel und einem lebenden biologischen Mittel, oder ein Gemisch davon ist.

3. Verwendung nach Anspruch 1 oder Anspruch 2, wobei das biologische Mittel ausgewählt ist aus chemischen Fungiziden, Arthropodiziden und Bakteriziden, oder eine Mischung aus zwei oder mehreren davon ist.

4. Verwendung nach Anspruch 3, wobei die Arthropodizide Insektizide oder Akarizide sind.

5. Verwendung nach einem der vorherigen Ansprüche, wobei das organische Trägermaterial ausgewählt ist aus Carnaubawachs, Bienenwachs, Montanwachs, chinesischem Wachs, Schellackwachs, Walratwachs, Candelillawachs, Rizinuswachs, Ouricurywachs und Reiskleiewachs, oder eine Mischung aus zwei oder mehreren davon ist.

6. Verwendung nach einem der vorstehenden Ansprüche, wobei der mindestens eine Erreger eine Bakterienspezies, eine Pilzspezies oder eine Arthropodenspezies ist.

7. Verwendung nach Anspruch 1 oder Anspruch 2, wobei das biologische Mittel mindestens ein biologischer Antagonist ist, der in Form von Bakteriensporen und/oder Pilzsporen vorhanden ist, die sich auf der Oberfläche der Partikel befinden.

8. Verwendung nach einem der vorherigen Ansprüche, wobei die Partikel einen mittleren Volumendurchmesser von 8 - 40 µm aufweisen.

9. Verwendung einer Beschichtungszusammensetzung in Trockenpulverform, wobei die Beschichtungszusammensetzung aus mindestens einem organischen Trägermaterial in Form von Partikeln mit einem mittleren Volumendurchmesser von 8 bis 200 µm, wobei das Trägermaterial aus Wachsen mit einem Schmelzpunkt von ≥ 50 °C ausgewählt ist, und mindestens einem biologischen Mittel mit einer Aktivität gegen mindestens einen Erreger einer einkeimblättrigen Pflanze als Beschichtung auf einem Samen einer einkeimblättrigen Pflanze, besteht.

10. Verfahren zum Beschichten eines einkeimblättrigen Samens mit einer Samenbeschichtungszusammensetzung in Pulverform, wobei die Zusammensetzung ein organisches Trägermaterial in Form von Partikeln mit einem mittleren Volumendurchmesser von 8 bis 200 µm umfasst, wobei das Trägermaterial ausgewählt ist aus Carnaubawachs, Bienenwachs, Montanwachs, chinesischem Wachs, Schellackwachs, Walratwachs, Candelillawachs, Castorwachs, Ouricurywachs und Reiskleiewachs, oder eine Mischung aus zwei oder mehreren davon ist, und mindestens ein biologisches Mittel, das eine Aktivität gegen mindestens einen Erreger einer einkeimblättrigen Pflanze aufweist, das ausgewählt ist aus Insektiziden, Akarizide, Fungizide, Bakterizide und lebende biologischen Mittel, wobei das Verfahren die Schritte eines Hinzufügens des biologischen Mittels zu dem organischen Trägermaterial, eines Mischens der beiden Komponenten miteinander und eines Anwendens der resultierenden Zusammensetzung auf einkeimblättrige Samen umfasst.

11. Verfahren zum Beschichten eines einkeimblättrigen Samens mit einer Samenbeschichtungszusammensetzung in Pulverform, wobei die Zusammensetzung aus einem organischen Trägermaterial in Form von Partikeln mit einem mittleren Volumendurchmesser von 8 bis 200 µm besteht, wobei das Trägermaterial ausgewählt ist aus Carnaubawachs, Bienenwachs, Montanwachs, chinesischem Wachs, Schellackwachs, Walratwachs, Candelillawachs, Castorwachs, Ouricurywachs und Reiskleiewachs, oder eine Mischung aus zwei oder mehreren davon ist, und mindestens einem biologischen Mittel, das eine Aktivität gegen mindestens einen Erreger einer einkeimblättrigen Pflanze aufweist, das ausgewählt ist aus Insektiziden, Akariziden, Fungiziden, Bakteriziden und lebenden biologischen Mitteln, wobei das Verfahren die Schritte eines Hinzufügens des biologischen Mittels zu dem organischen Trägermaterial, eines Mischens der beiden Komponenten miteinander und eines Anwendens der resultierenden Zusammensetzung auf einkeimblättrige Samen umfasst.

12. Einkeimblättriger Samen, der mit einer Beschichtungszusammensetzung beschichtet ist, wie sie in einem der Ansprüche 1 bis 9 definiert ist.

## Revendications

1. Utilisation d'une composition de revêtement sous la forme d'une poudre sèche, dans laquelle la composition de revêtement comprend au moins un matériau support organique sous la forme de particules ayant un diamètre moyen en volume de 8 à 200 µm, le matériau support étant sélectionné parmi des cires ayant un point de fusion ≥ 50° Celsius, et au moins un agent biologique ayant une activité contre au moins un pathogène d'une plante monocotylédone comme un revêtement sur une graine d'une plante monocotylédone.

2. Utilisation selon la revendication 1, dans laquelle l'agent biologique est sélectionné parmi un agent chimique et un agent biologique vivant ou un mélange de ceux-ci.

3. Utilisation selon la revendication 1 ou la revendication 2, dans lequel l'agent biologique est sélectionné parmi des fongicides, des arthropodicides et des bactéricides chimiques ou est un mélange de deux de ceux-ci ou plus.

4. Utilisation selon la revendication 3, dans laquelle les arthropodicides sont des insecticides ou des acaricides.

5. Utilisation selon l'une quelconque des revendications précédentes, dans laquelle le matériau support organique est sélectionné parmi la cire de carnauba, la cire d'abeille, la cire de lignite, la cire chinoise, la cire de gomme-laque, la cire de sperme de baleine, la cire de candelilla, la cire de ricin, la cire d'ouricury et la cire de son de riz ou est un mélange de deux de celles-ci ou plus.

6. Utilisation selon l'une quelconque des revendications précédentes, dans laquelle l'au moins un pathogène est une espèce bactérienne, une espèce fongique ou une espèce d'arthropode.

7. Utilisation selon la revendication 1 ou la revendication 2, dans laquelle l'agent biologique est au moins un antagoniste biologique qui est présent sous la forme de spores bactériennes et/ou de spores fongiques situées à la surface desdites particules.

8. Utilisation selon l'une quelconque des revendications précédentes, dans laquelle les particules ont un diamètre moyen en volume de 8 à 40 µm.

9. Utilisation d'une composition de revêtement sous la forme d'une poudre sèche, dans laquelle la composition de revêtement est constituée par au moins un matériau support organique sous la forme de particules ayant un diamètre moyen en volume de 8 à 200 µm, le matériau support étant sélectionné parmi des cires ayant un point de fusion ≥ 50° Celsius, et au moins un agent biologique ayant une activité contre au moins un pathogène d'une plante monocotylédone comme un revêtement sur une graine d'une plante monocotylédone.

10. Procédé de revêtement d'une graine de monocotylédone avec une composition de revêtement de graine sous la forme d'une poudre sèche, dans lequel la composition comprend un matériau support organique sous la forme de particules ayant un diamètre moyen en volume de 8 à 200 µm, le matériau support étant sélectionné parmi la cire de carnauba, la cire d'abeille, la cire de lignite, la cire chinoise, la cire de gomme-laque, la cire de sperme de baleine, la cire de candelilla, la cire de ricin, la cire d'ouricury et la cire de son de riz ou étant un mélange de deux de celles-ci ou plus, et au moins un agent biologique qui a une activité contre au moins un pathogène d'une plante monocotylédone et qui est sélectionné parmi des insecticides, des acaricides, des fongicides, des bactéricides et des agents biologiques vivants, le procédé comprenant les étapes consistant à ajouter l'agent biologique au matériau support organique, mélanger les deux composants ensemble et appliquer la composition qui en résulte aux graines de monocotylédone.

11. Procédé de revêtement d'une graine de monocotylédone avec une composition de revêtement de graine sous la forme d'une poudre sèche, dans lequel la composition est constituée par un matériau support organique sous la forme de particules ayant un diamètre moyen en volume de 8 à 200 µm, le matériau support étant sélectionné parmi la cire de carnauba, la cire d'abeille, la cire de lignite, la cire chinoise, la cire de gomme-laque, la cire de sperme de baleine, la cire de candelilla, la cire de ricin, la cire d'ouricury et la cire de son de riz ou étant un mélange de deux de celles-ci ou plus, et au moins un agent biologique qui a une activité contre au moins un pathogène d'une plante monocotylédone et qui est sélectionné parmi des insecticides, des acaricides, des fongicides, des bactéricides et des agents biologiques vivants, le procédé comprenant les étapes consistant à ajouter l'agent biologique au matériau support organique, mélanger les deux composants ensemble et appliquer la composition qui en résulte aux graines de monocotylédone.

12. Graine de monocotylédone revêtue d'une composition de revêtement selon l'une quelconque des revendications 1 à 9.
